# EUROPÄISCHE PATENTSCHRIFT

(11) **EP 1 144 342 B1**
(45) Veröffentlichungstag und Bekanntmachung des Hinweises auf die Patenterteilung: **23.05.2007**
(21) Anmeldenummer: 99968302.2
(22) Anmeldetag: 17.12.1999
(51) Int. Cl.: C05F 11/02, C05G 3/00

(54) **ORGANISCHES DÜNGEMITTEL MIT HUMINSTOFFCHARAKTER SOWIE VERFAHREN ZU SEINER HERSTELLUNG UND VERWENDUNG**
ORGANIC FERTILIZER HAVING HUMIC PROPERTIES, ITS METHOD OF PRODUCTION AND ITS USE
ENGRAIS ORGANIQUE A CARACTERE DE MATIERES HUMIQUES, SON PROCEDE DE PRODUCTION ET SON UTILISATION

(30) Priorität: 22.12.1998 DE 19859068
(43) Veröffentlichungstag der Anmeldung: 17.10.2001
(73) Patentinhaber: Novihum GmbH, 01994 Saalhausen (DE)
(72) Erfinder: FISCHER, Klaus, D-01737 Grillenburg (DE); SCHIENE, Rainer, D-01737 Tharandt (DE); KATZUR, Joachim, D-03546 Lübben (DE)
(74) Vertreter: Haschick, Gerald
(86) Internationale Anmeldenummer: PCT/DE1999/004029
(87) Internationale Veröffentlichungsnummer: WO 2000/037394

(56) Entgegenhaltungen:
- EP-A- 0 282 250
- DE-A- 2 247 938
- US-A- 5 302 524
- US-A- 5 720 792
- DATABASE WPI Section Ch, Week 199338 Derwent Publications Ltd., London, GB; Class C04, AN 1993-301457 XP002134110 & SU 1 763 437 A (UKR COAL ENRICHMENT BRIQUETTING INST), 23. September 1992 (1992-09-23)

## Beschreibung

Die Erfindung betrifft ein Verfahren zur Herstellung eines organischen Düngemittels mit Huminstoffcharakter nach dem Oberbegriff des Anspruchs 1. Die Erfindung betrifft weiterhin ein nach dem Verfahren hergestelltes Düngemittel mit einer besonderen stofflichen Zusammensetzung sowie dessen Verwendung. Das Düngemittel lässt sich als naturnahes Mittel zur nachhaltigen Pflanzenernährung und zur Bodenverbesserung anwenden.

Auf Grund ihrer chemischen Eigenschaften und ihrer Verfügbarkeit hat Braunkohle schon seit längerer Zeit Interesse als Ausgangsmaterial für die Herstellung von Stoffen bzw. Stoffgemischen mit Düngewirkung gefunden.

So ist aus der DE 22 47 938 A ein Verfahren nach dem Oberbegriff des Anspruchs 1 bekannt. Rohbraunkohle wird in wässriger Suspension bei erhöhter Temperatur (80 bis 200°C) und erhöhtem Druck (bis 50 atü) oxidierend und ammonisierend behandelt. Die Suspension enthält 95 bis 70 Gewichtsprozent Wasser, wird mit Ammoniak versetzt, in einem Druckgefäß auf Umsetzungstemperatur erhitzt und dann durch Einpressen von reinem Sauerstoff auf Umsetzungsdruck gebracht. Eine bestimmte Art und Weise der Einstellung eines bestimmten pH-Wertes ist nicht beschreiben.

Aus der EP 0 298 710 ist ein Verfahren bekannt, bei dem Kohle mit einem wässrigen Medium zu einer Aufschlämmung mit einem pH-Wert im Bereich von 4 bis 9 verarbeitet wird. Die Aufschlämmung wird mit einem gasförmigen Oxydationsmittel, wie Sauerstoff, Luft und Mischungen davon, oxydiert. Die Oxydation erfolgt bei Temperaturen von 100 bis 300 °C, bei einem Druck von 0,1 bis 10 MPa und einer Reaktionszeit von 5 bis 600 Minuten. Das so oxydierte Produkt weist nur einen Stickstoffanteil von unter 2 % auf. Es ergibt sich ein ungünstiges C/N-Verhältnis von ca. 35 bis 40.

Aus der DE 40 15 277 A1 ist ein Verfahren zur Wachstumsstimulation von Sämlingen bekannt, welches darin besteht, dass ein Kohleoxydationsprodukt dem Medium, in dem der Sämling wächst, zugeführt wird. Als Kohleoxydationsprodukt wird ein Produkt vorgeschlagen, welches durch trockene Oxydation der Kohle mit Sauerstoff, insbesondere Luft, bei einer Temperatur zwischen 120 und 350 °C und einem Partialdruck des Sauerstoffs zwischen 0,01 und 1 MPa, vorzugsweise zwischen 0,01 und 0,5 MPa, während einer Kontaktzeit zwischen 15 und 600 Minuten hergestellt wird. Als ein weiteres Kohleoxydationsprodukt wird ein Produkt vorgeschlagen, das gemäß der EP 0 298 710 hergestellt wird. Das durch trockene Oxydation hergestellte Kohleoxydationsprodukt weist typischerweise einen Stickstoffanteil von unter 2 % und ein C/N-Verhältnis von ca. 35 auf.

Gemäß der US 3 607 212 wird Braunkohle mit anorganischem Material und/oder organischen Massenabfällen gemischt. Diese Gemische werden gegebenenfalls vorher einer mechanischen Bearbeitung und/oder Hydrolyseprozessen unterworfen.

Weiter bekannte Arbeiten beziehen sich auch auf den hohen Gehalt der Braunkohle an Kohlehuminsäuren und die Möglichkeiten, diese Huminsäuren zu gewinnen. Die Kohlehuminsäuren sind beispielsweise gemäß der US 3 770 411 mit wässrigem Ammoniak extrahiert und die Extrakte mit Phosphorsäure umgesetzt worden.

Aus der US 4 013 440 ist ein Verfahren bekannt, bei dem Kohle direkt mit Harnstoff bzw. Harnstofflösungen behandelt und diese Produkte nachfolgend mit HNO₃ bzw. H₂O₂ oxydiert werden.

In Mukherjee, P. N. u. a.: Proc. Nat. Acad. Sci. India, vol. A 38, 1961, No. 1, S. 124 - 126 war das Ziel verfolgt worden, aus Kohle organomineralische Düngemittel mit hohem Stickstoffgehalt (10...20 %) auf direktem Wege herzustellen. Bei dem beschriebenen Verfahren handelt es sich um die Umsetzung von Kohle mit Ammoniak/Luft/Sauerstoff-Gemischen jedoch in Fließbettverfahren bei hohen Temperaturen im Bereich von 250 bis 325 °C nach dem Prinzip der Amoxydation.

Außerdem sind aus der Druckschrift Gürüz; Kemal: Oxyammoniation of Elbistan lignite to produce a nitrogenous fertilizer, Fuel, 1980, Vol. 59, S. 772 - 776 Untersuchungen bekannt geworden, bei denen eine bestimmte Braunkohle mit wässrigem Ammoniak und Sauerstoff bei Überdruck in einem Autoklaven bei erhöhten Temperaturen umgesetzt wurde. Der Sauerstoffdruck gemessen bei 25 °C lag in Größenordnungen von 0,1 bis 2,3 MPa. Um einen hohen N-Gehalt zu erreichen, wurde die Braunkohle mit Mineralsäuren vorbehandelt. Das so hergestellte Produkt weist einen Gehalt von 8.8 bis 18 % Gesamtstickstoff auf, wobei bis zu 64 % als wasserlösliche Anteile in der Ammonium-Form vorliegen. Dieser Dünger kann als reiner Stickstoffdünger mit hohem Ammonium-Anteil bewertet werden.

Aus der SU 1 763 437 A1 ist ein Verfahren bekannt, bei dem von einer geringwertigen (offenbar durch Lagerung an der Luft voroxydierten) Braunkohle ausgegangen wird, die mit konzentrierter Alkalilösung (Kalilauge und/oder Natronlauge) ca. 30 Minuten durch Rühren vermischt wird. In das Gemisch wird konzentrierter wässriger Ammoniak gegeben und weitere 10 Minuten durch Rühren vermischt. Hierbei handelt es sich um ein zweistufiges Verfahren von einfachen Mischvorgängen.

Das Produkt besitzt eine hohe Feuchte (bis 55%) und hat eine hohe Gesamtalkalität (bis 16 %), wobei ein hoher Anteil an Natrium eher ungünstig für die Pflanzen und den Boden ist. Das Produkt hat einen pH-Wert von 8,6...9,7. Es ist also deutlich alkalisch, was ungünstig für den Ammoniumgehalt ist und zu Verlusten des Ammoniaküberschusses, der nicht chemisch gebunden wurde, führt.

Aus der EP 0 689 526 B1 ist noch ein Verfahren zur Herstellung eines organischen Düngemittels durch oxydative Ammonolyse von technischen Lignin bekannt, wobei das Lignin durch Ausfällen aus Ablaugen von alkalischen Zellstoffaufschlussverfahren bzw. aus alkalischen Ligninextrakten gewonnen wird. Die Besonderheit des Verfahrens besteht darin, dass das Ausfällen des Lignins im alkalischen Bereich beendet wird. Das organische Düngemittel zeichnet sich durch einen besonders hohen Anteil an fester organisch gebundenen Stickstoff (55 % bis 85 %, gemessen am Gesamtstickstoffgehalt des Düngemittels) aus. Zur Durchführung des Verfahrens wird frei verfügbares technisches Lignin benötigt.

Aufgabe der Erfindung ist es, einen in der Natur in großen Mengen verfügbaren organischen Rohstoff durch ein Verfahren in ein organisches Düngemittel mit ausgeprägtem Huminstoffcharakter, mit erhöhtem Stickstoffgehalt bei günstigem C/N-Verhältnis und Langzeitdüngewirkung umzusetzen.

Diese Aufgabe wird erfindungsgemäß dadurch gelöst, dass die Braunkohle in ein wässrig-ammoniakalisches Gemisch von Suspension und Lösung mit einem pH-Wert größer 9 bis 12 überführt und anschließend in einem Reaktor zunächst ohne Zufuhr von Sauerstoff oder Luft alkalisch aktiviert und dabei in einer bis zum 0,5 h regelbaren Zeit auf eine Oxydationstemperatur von unter 100 °C gebracht wird, anschließend das Oxydationsgas bei einer Reaktionstemperatur unter 100 °C und bei Luft oder Sauerstoff als Oxydationsgas unter Normaldruck und bei Luft-/Sauerstoffgemischen als Oxydationsgas bei Normaldruck mit einem Sauerstoffpartialdruck im Bereich von 0,02 MPa bis < 0,1 MPa in das Reaktionsgemisch jeweils nach dem Injektorprinzip eingespeist wird und schließlich die Zufuhr von Oxydationsgas geschlossen und die Reaktion abgebrochen und das Reaktionsgemisch ohne weitere Oxydationsgaszufuhr auf eine für die weitere Aufarbeitung notwendige Temperatur abgekühlt wird, wobei die Abkühlzeit weniger als 1 h beträgt, und das organische Düngemittel als Dispersion im wässrigen Milieu durch Eindicken oder Trocknen gewonnen wird, wobei ein C/N-Verhältnis von 9 bis 15 erhalten wird.

Die Oxydation kann mit Luft oder Sauerstoff, oder Luft/Sauerstoff-Gemischen und in einem wässrig-ammoniakalischen Milieu mit einer Ammoniakkonzentration bis zu 7 % durchgeführt werden. Die Braunkohle kann mit unterschiedlicher Partikelgröße eingesetzt werden.

Gemäß einer besonderen Ausführung des Verfahrens wird als Ausgangsmaterial Braunkohle im Gemisch mit technischen Ligninen der Zellstoffindustrie sowie der Holzhydrolyse, Braunkohle im Gemisch mit Lignin sowie Lignocellulosematerial aus dem Steam Explosion-Aufschluss zur Faserstoffherstellung und Braunkohle im Gemisch mit Lignocellulosematerial, wie Holz- bzw. Rindepartikel, eingesetzt.

Eine weitere vorteilhafte Ausführung des Verfahrens sieht vor, dass bei oder im Anschluss an die Oxydation der Braunkohle oder der Braunkohle im Gemisch mit Ligninen eine weitere Dotierung mit Makro- und Mikronährstoffen, wie mit Phosphor, erfolgt.

Ein mit dem Verfahren hergestelltes organisches Düngemittel ist durch die im Anspruch 8 genannten Merkmale angegeben. Das erfindungsgemäße Düngemittel zeichnet sich durch ein besonders günstiges C/N-Verhältnis von 9 bis 15 aus, wobei bei diesem C/N-Verhältnis der Stickstoff in unterschiedlich gebundener Form vorliegt.

Eine Verwendung des organischen Düngemittels ist durch die im Anspruch 10 genannten Merkmale beschrieben.

Bei dem Verfahren war es überraschend, dass die Braunkohle, obwohl sie mit einem hohen Anteil Strukturen von kohlespezifischem Humin- bzw. Fulvinsäuretyp vorliegt, die hochkondensiert sind, durch Oxydation im wässrig-ammoniakalischen Milieu als Suspension bzw. teilweise gelöst, zu einem humusähnlichen Düngemittel mit einer Langzeitdüngewirkung umgesetzt werden kann.

Durch das erfindungsgemäße Verfahren wird in die kohlespezifischen Huminstoffe Stickstoff in chemischer Bindung eingeführt, und dabei werden diese Kohlehuminstoffe in ihrer chemischen Struktur so verändert, dass sie den unter natürlichen Bedingungen gebildeten Huminstoffen des Bodens im stärkeren Maße ähnlich sind. Gleichzeitig werden die hochmolekularen organischen Strukturen der Kohle, die nicht huminstoffähnlich sind, partiell abgebaut, d. h. zu kleineren Molekülgrößen aufgespalten und mit polaren Gruppen funktionalisiert.

Das Verfahren kann technologisch so umgesetzt werden, dass ein wässrig-ammoniakalisches Gemisch von Suspension und Lösung des Ausgangsmaterials über einen Wärmetauscher im Kreislauf geführt und dabei das Oxydationsgas über ein Injektorsystem eingetragen wird.

Im Vergleich zu bisher bekannten Lösungen vereinigt das Verfahren in sich eine Reihe von Vorteilen.

Es zeichnet sich dadurch aus, dass Braunkohle als Ausgangsmaterial insgesamt ohne vorherige Trennoperationen umgesetzt wird und der bei der Umsetzung hergestellte Humusersatzstoff gleichfalls als Gesamtprodukt ohne nachfolgende zusätzliche Trennprozesse verwertet werden kann.

Als Oxydationsmittel wird Sauerstoff oder nur Luft eingesetzt. Im Gegensatz zu allen anderen bisher beschriebenen Verfahren einer derartigen Oxydation mit Sauerstoff oder Luft wird es erfindungsgemäß vorteilhafterweise unter schonenden Bedingungen bei Normaldruck und Temperaturen bis 100 °C geführt.

Die mit dem Verfahren aus Braunkohle hergestellten Produkte können bis zu 6 % Gesamtstickstoff enthalten, der in verschiedenartigen chemischen Bindungsformen vorliegt. Die chemischen Bindungsformen unterscheiden sich hinsichtlich ihrer Hydrolysierbarkeit. Der in der Ammonium-Form gebundene Stickstoff (20 - 45 % des Gesamtstickstoffs) ist mit in Wasser suspendiertem MgO leicht als Ammoniak abzuspalten, während die organischen Bindungsformen (55 - 80 % des Gesamtstickstoffs) schwerer hydrolysierbar sind. Ein Teil des organisch gebundenen Stickstoffs liegt in der Amid-Form vor (bis 20 % des Gesamtstickstoffs), die auf normale Weise mit verdünnter Natronlauge unter den Bedingungen der Wasserdampfdestillation hydrolysiert werden kann. Der unter diesen experimentellen Bedingungen nicht hydrolysierbare Anteil wird als fester organisch gebundener Stickstoff bezeichnet (bis 60 % des Gesamtstickstoffs).

Diese unterschiedlichen Bindungsformen des Stickstoffs verbunden mit der organischen Matrix bewirken, dass bei Anwendung der Produkte die Pflanzen nachhaltig und langzeitig mit Stickstoff versorgt werden. Gleichzeitig damit wird der Austrag von Stickstoff ins Sicker- und Grundwasser erheblich verringert.

Die elementaranalytischen Daten der Produkte zeigen insgesamt die günstigen und erwünschten Veränderungen des Ausgangsmaterials, die durch das Verfahren erreicht werden.

Das hohe C/N-Verhältnis der Ausgangsbraunkohle von 93 konnte auf den für die Anwendung vorteilhaften Wert von 9 - 15 gesenkt werden.

Das Atomverhältnis H/C steigt von 1,05 bis auf 1,28 an. Während in den Kohlehuminsäuren etwa 1 - 1,5 % N organisch gebunden sind, beträgt dieser Anteil in den Humusersatzstoffen bis zu 4 %, ähnlich zu den unter natürlichen Bedingungen entstandenen Huminsäuren des Bodens.

Nach dem erfindungsgemäßen Verfahren können Braunkohlen unterschiedlicher Standorte (Herkunft) als Ausgangsmaterial eingesetzt werden.

Es ist ein besonderer Vorteil des Verfahrens, dass als Ausgangsmaterial auch Gemische von Braunkohlen mit technischen Ligninen der Zellstoffindustrie sowie der Holzhydrolyse, von Braunkohlen mit Lignin sowie Lignocellulosematerial aus dem Steam Explosion-Aufschluss zur Faserstoffherstellung und von Braunkohle mit Lignocellulosematerial, wie Holz- bzw. Rindepartikel eingesetzt werden können.

Mit dem Einsatz oben genannter Gemische lassen sich Produkteigenschaften erreichen, die effektive Spezialanwendungen ermöglichen, wie z. B. zum Erosionsschutz.

Das erfindungsgemäße Verfahren zeichnet sich weiterhin dadurch aus, dass das Produkt zusätzlich mit Makro- und Mikronährstoffen, wie z. B. Phosphor, dotiert werden kann.

Die Erfindung wird nachfolgend anhand von Ausführungsbeispielen noch näher erläutert.

### Ausführungsbeispiel 1

30 - 70 g Braunkohle mit Korngrößen im Bereich von < 1,0 mm, vorzugsweise < 0,4 mm wurden in 200 - 300 ml Ammoniak unter kräftigem Durchmischen suspendiert und dabei teilweise gelöst. Danach wurde in einer ersten Variante dieses Gemisch aus Suspension und Lösung unter Zugabe von 3000 - 3500 ml Ammoniak in den Reaktor eingefüllt.

Dieses Gemisch aus Suspension und Lösung wurde in einer zweiten Variante durch mehrstündiges Stehen unter gelegentlichem Schütteln und Durchmischen vorbehandelt. Anschließend wird wie bei Variante 1 verfahren.

Das Gemisch wird nun über einen Rohrreaktor und einen Wärmetauscher umgepumpt und auf die Reaktionstemperatur von 70 - 76 °C gebracht. Nachdem die vorgegebene Reaktionstemperatur erreicht ist, wird Sauerstoff mit einer Menge von 30 - 50 1/Std. über ein Injektionssystem zudosiert und die einsetzende oxydative Ammonolyse unter ständigem Umpumpen und gleich bleibender Zufuhr des Oxydationsgases über eine Reaktionszeit von 1 bis 4 Stunden geführt.

Mit dem Reaktionsende wird die Sauerstoffzufuhr geschlossen, das Reaktionsgemisch unter Umpumpen abgekühlt und nachfolgend ausgetragen. Das Reaktionsprodukt wird schließlich durch Eindampfung bzw. Vakuumeindampfung als Feststoff gewonnen.

Die Stickstoffausbeute wurde analytisch bestimmt.

### Elementaranalyse:

| | |
|---|---|
| C | 53,50% |
| H | 5,32% |
| N | 5,97% |
| S | 0,45% |

Bindungsformen des Stickstoffs (in % des Gesamtstickstoff-Gehaltes)

| | |
|---|---|
| Ammonium-N | 32,8 % |
| organisch gebunden | 67,2 % |
| Amid-N | 11,1 % |
| fester organisch gebunden | 56,1 % |

### Ausführungsbeispiel 2

Die Umsetzung wird wie im Ausführungsbeispiel 1, Variante 1 oder 2, durchgeführt. An Stelle von Sauerstoff wird jedoch Luft als Oxydationsgas in der Menge von 50 1/Std. zudosiert.
Die Stickstoffausbeute wurde analytisch bestimmt.

### Elementaranalyse:

| | |
|---|---|
| C | 57,03 % |
| H | 5,15 % |
| N | 5,56 % |
| S | 0, 58 % |

Bindungsformen des Stickstoffs (in % des Gesamtstickstoff-Gehaltes)

| | |
|---|---|
| Ammonium-N | 34, 6 % |
| organisch gebunden | 65,4 % |
| Amid-N | 14,0 % |
| fester organisch gebunden | 51,4 % |

### Ausführungsbeispiel 3

35 g Braunkohle mit Korngrößen im Bereich von < 1,0 vorzugsweise < 0,4 mm wurden in 200 ml Ammoniak unter kräftigem Durchmischen suspendiert und dabei teilweise gelöst und 35 g Alkalilignin in 200 ml Ammoniak gelöst. Dieses Gemisch aus Kohlesuspension und -lösung und die Ligninlösung wurden vereinigt und wie unter Ausführungsbeispiel 1, Variante 1 beschrieben sofort oder, wie unter Ausführungsbeispiel 1, Variante 2 beschrieben, nach Vorbehandlung weiterverarbeitet.

Danach wurde dieses Gesamtgemisch unter Zugabe von 3000 - 3500 ml Ammoniak in den Reaktor eingefüllt.

Das Gemisch wurde anschließend über einen Rohrreaktor und einen Wärmetauscher umgepumpt und auf die Reaktionstemperatur von 70 - 76 °C gebracht.
Die Stickstoffausbeute wurde analytisch bestimmt.

### Elementaranalyse:

| | |
|---|---|
| C | 55,92 % |
| H | 5,46 % |
| N | 5,56 % |
| S | 0,86 % |

Bindungsformen des Stickstoffs (in % des Gesamtstickstoff-Gehaltes)

| | |
|---|---|
| Ammonium-N | 35,3 % |
| organisch gebunden | 64,7 % |
| Amid-N | 11,5 % |
| fester organisch gebunden | 53,2 % |

### Ausführungsbeispiel 4

35 g Braunkohle mit Korngrößen im Bereich von < 1,0 vorzugsweise < 0,4 mm wurden in 200 ml Ammoniak unter kräftigem Durchmischen suspendiert und dabei teilweise gelöst und 35 g Sulfitablaugentrockenpulver in 200 ml Ammoniak gelöst. Dieses Gemisch aus Kohlesuspension und -lösung und die Ligninlösung wurden vereinigt und wie unter Ausführungsbeispiel 1, Variante 1 beschrieben sofort oder, wie unter Ausführungsbeispiel 1, Variante 2 beschrieben, nach Vorbehandlung weiterverarbeitet.

Danach wurde dieses Gesamtgemisch unter Zugabe von 3000 - 3500 ml Ammoniak in den Reaktor eingefüllt.

Das Gemisch wurde anschließend über einen Rohrreaktor und einen Wärmetauscher umgepumpt und auf die Reaktionstemperatur von 70 - 76 °C gebracht.
Die Stickstoffausbeute wurde analytisch bestimmt.

### Elementaranalyse:

| | |
|---|---|
| C | 45, 97 % |
| H | 4, 94 % |
| N | 4,65 % |
| S | 3,86 % |

Bindungsformen des Stickstoffs (in % des Gesamtstickstoff-Gehaltes)

| | |
|---|---|
| Ammonium-N | 35,9 % |
| organisch gebunden | 64,1 % |
| Amid-N | 14,6 % |
| fester organisch gebunden | 49,5 % |

### Ausführungsbeispiel 5

Die Umsetzung wurde wie im Ausführungsbeispiel 4 durchgeführt. An Stelle von Sauerstoff wurde jedoch Luft als Oxydationsgas in der Menge von 50 l/Std. zudosiert.
Die Stickstoffausbeute wurde analytisch bestimmt.

### Elementaranalyse:

| | |
|---|---|
| C | 49,77 % |
| H | 4,73 % |
| N | 3,34 % |
| S | 3,55 % |

Bindungsformen des Stickstoffs (in % des Gesamtstickstoff-Gehaltes)

| | |
|---|---|
| Ammonium-N | 31,1 % |
| organisch gebunden | 68,9 % |
| Amid-N | 13,8 % |
| fester organisch gebunden | 55,1 % |

## Patentansprüche

1. Verfahren zur Herstellung eines organischen Düngemittels mit Huminstoffcharakter, durch oxydierende und ammonisierende Behandlung von Braunkohle, **dadurch gekennzeichnet, dass** die Braunkohle in ein wässrig-ammoniakalisches Gemisch von Suspension und Lösung mit einem pH-Wert größer 9 bis 12 überführt und anschließend in einem Reaktor zunächst ohne Zufuhr von Sauerstoff oder Luft alkalisch aktiviert und dabei in einer bis zum 0,5 h regelbaren Zeit auf eine Oxydationstemperatur von unter 100 °C gebracht wird, anschließend das Oxydationsgas bei einer Reaktionstemperatur unter 100 °C und bei Luft oder Sauerstoff als Oxydationsgas unter Normaldruck und bei Luft-/Sauerstoffgemischen als Oxydationsgas bei Normaldruck mit einem Sauerstoffpartialdruck im Bereich von 0,02 MPa bis < 0,1 MPa in das Reaktionsgemisch jeweils nach dem Injektorprinzip eingespeist wird und schließlich die Zufuhr von Oxydationsgas geschlossen und die Reaktion abgebrochen und das Reaktionsgemisch ohne weitere Oxydationsgaszufuhr auf eine für die weitere Aufarbeitung notwendige Temperatur abgekühlt wird, wobei die Abkühlzeit weniger als 1 h beträgt, und das organische Düngemittel als Dispersion im wässrigen Milieu durch Eindicken oder Trocknen gewonnen wird, wobei ein C/N-Verhältnis von 9 bis 15 erhalten wird.

2. Verfahren nach Anspruch 1 **dadurch gekennzeichnet, dass** die Oxydation mit Luft oder Sauerstoff, oder Luft/Sauerstoff-Gemischen und in einem wässrig-ammoniakalischen Gemisch aus Suspension und Lösung mit einer Ammoniakkonzentration bis zu 7 % durchgeführt wird.

3. Verfahren nach einem oder mehreren der Ansprüche 1 bis 2 **dadurch gekennzeichnet, dass** die Braunkohlen mit unterschiedlicher Partikelgröße eingesetzt werden.

4. Verfahren nach einem oder mehreren der Ansprüche 1 bis 3 **dadurch gekennzeichnet, dass** die Oxydation über einen Zeitraum von 0,25 bis 4 Stunden geführt wird.

5. Verfahren nach einem oder mehreren der Ansprüche 1 bis 4 **dadurch gekennzeichnet, dass** die Braunkohle im Gemisch mit technischen Ligninen der Zellstoffindustrie, sowie der Holzhydrolyse, Braunkohle im Gemisch mit Lignin sowie Lignocellulosematerial aus dem Steam Explosion-Aufschluss zur Faserstoffherstellung und Braunkohle im Gemisch mit Lignocellulosematerial, wie Holz- bzw. Rindepartikel, eingesetzt wird.

6. Verfahren nach einem oder mehreren der Ansprüche 1 bis 5 **dadurch gekennzeichnet, dass** bei der oder im Anschluss an die Oxydation der Braunkohle oder der Braunkohle im Gemisch mit Ligninen eine weitere Dotierung mit Makro- oder Mikronährstoffen, wie mit Phosphor, erfolgt.

7. Organisches Düngemittel mit Huminstoffcharakter nach dem Verfahren der Ansprüche 1 bis 6 **dadurch gekennzeichnet, dass** das Produkt ein C/N-Verhältnis von 9 bis 15 aufweist und gemessen am Gesamtstickstoff der Stickstoff chemisch unterschiedlich gebunden vorliegt, wovon
- 20 - 45 % als Ammonium-Stickstoff vorliegen
- 55 - 80 % organisch gebunden sind, wovon
- bis zu 20 % des Gesamtstickstoffs als Amid und
- bis zu 60 % nicht als Amid hydrolysierbar organisch gebunden sind.

8. Organisches Düngemittel nach Anspruch 7 **dadurch gekennzeichnet, dass** bei einem C/N-Verhältnis von 9 bis 15 das organische Düngemittel bis zu 6 % Gesamtstickstoff enthält.

9. Verwendung des organischen Düngemittels nach einem oder mehreren der Ansprüche 7 bis 8 **dadurch gekennzeichnet, dass** das organische Düngemittel als solches verwendet oder ertrags- und bodenverbessernden Substraten zugesetzt wird.

## Claims

1. Method to produce an organic fertiliser with humic matter character, by oxidising and ammonising treatment of lignite, **characterised in that** lignite is converted into an aqueous-ammoniacal mixture of suspension and solution with a pH higher than 9-12 and subsequent alkaline activation in a reactor initially without supply of oxygen or air and heated to an oxidation temperature of less than 100 °C within a time that be set to 0.5 h intervals, and subsequent feeding of oxidation gas at a reaction temperature of less than 100 °C, and air or oxygen as oxidation gas at normal pressure and air/oxygen mixtures as oxidation gas at normal pressure with a partial oxygen pressure in a range between 0.02 MPa and < 0.1 MPa, into the reaction mixture after the injector principle and following shutting of oxidation gas supply and termination of the reaction and cooling of the reaction mixture without further oxidation gas supply to the temperature that is necessary for further processing, with the cooling period being less than 1 h, and the organic fertiliser being yielded as a dispersion in an aqueous milieu by thickening or drying, obtaining a C/N ratio of 9 to 15.

2. Method according to claim 1 **characterised in that** oxidation is conducted with air or oxygen or air/oxygen mixtures and in an aqueous-ammoniacal mixture of suspension and solution with an ammonia concentration up to 7 %.

3. Method according to one or more of claims 1 to 2 **characterised in that** lignite with different particle sizes are used.

4. Method according to one or more of claims 1 to 3 **characterised in that** the oxidation is continued for a period between 0.25 and 4 hours.

5. Method according to one or more of claims 1 to 4 **characterised in that** lignite is mixed with technical lignins obtained from pulp and paper industry and wood hydrolysis, lignite is mixed with lignin and ligno-cellulosis material from steam explosion digestion for fibrous material, production and lignite is mixed with ligno-cellulosis material, such as wood or bark particles.

6. Method according to one or more of claims 1 to 5 **characterised in that** oxidation of lignite or lignite mixed with lignins is followed by further doping with macro- or micro-nutrients, e.g. phosphorus.

7. Organic fertiliser with humic matter character according to the method in claims 1 to 6 **characterised in that** the product has a C/N ratio of 9 to 15 and, in relation to total nitrogen content, nitrogen is present in different chemical bonds, namely
- 20 - 45 % as ammonium-nitrogen
- 55 - 80 % organically bonded, of that:
- up to 20 % of total nitrogen content as amide, and
- up to 60 % not hydrolysable as amide organically bonded.

8. Organic fertiliser according to claim 7 **characterised in that** the organic fertiliser contains up to 6 % total nitrogen content at a C/N ratio of 9 to 15.

9. Utilisation of organic fertiliser according to one or more of claims 7 to 8 **characterised in that** the organic fertiliser is used as such or admixed to yield- and soil-enhancing substrates.

## Revendications

1. Procédé de production d'un engrais organique à caractère humique par traitement oxydant et par ammonisation de lignite, **caractérisé en ce que** le lignite est transformé dans un mélange aqueux-ammoniacal composé d'une suspension et d'une solution présentant un pH supérieur à une valeur comprise entre 9 et 12, et il subit ensuite une activation alcaline dans un réacteur d'abord sans amenée d'oxygène ni d'air en étant porté à une température d'oxydation inférieure à 100°C pendant un laps de temps pouvant durer jusqu'à 0,5 h, au cours de la phase suivante le gaz d'oxydation est introduit dans le mélange réactionnel à chaque fois d'après le principe de l'injection à une température réactionnelle inférieure à 100°C en utilisant l'air et l'oxygène comme gaz d'oxydation à une pression normale ainsi que des mélanges d'air et d'oxygène comme gaz d'oxydation à une pression normale en ayant une pression partielle de l'oxygène comprise entre 0,02 MPa et < 0,1 MPa et, pour finir, l'amenée du gaz d'oxydation est terminée, la réaction est interrompue et le mélange réactionnel est refroidi, sans continuer d'amener le gaz d'oxydation, à une température nécessaire à la suite du traitement, le temps de refroidissement étant inférieur à 1 h, et l'engrais organique est extrait sous forme de dispersion du milieu aqueux, par concentration ou par séchage, en obtenant le rapport C/N compris entre 9 et 15.

2. Procédé selon la revendication 1, **caractérisé en ce que** l'oxydation est réalisée avec de l'air ou de l'oxygène, ou des mélanges d'air et d'oxygène, et dans un mélange aqueux-ammoniacal composé d'une suspension et d'une solution présentant une concentration en ammoniac allant jusqu'à 7 %.

3. Procédé selon une ou plusieurs revendications 1 à 2, **caractérisé en ce que** les lignites utilisés sont des lignites de grosseurs de particules différentes.

4. Procédé selon une ou plusieurs revendications 1 à 3, **caractérisé en ce que** l'oxydation est réalisée sur un laps de temps compris entre 0,25 et 4 heures.

5. Procédé selon une ou plusieurs revendications 1 à 4, **caractérisé en ce qu'**on utilise le lignite mélangé aux lignines techniques de l'industrie de la cellulose, ainsi que de l'hydrolyse du bois, le lignite mélangé à la lignine ainsi qu'à un matériau lignocellulosique issu du fractionnement par procédé d'explosion de la vapeur destiné à la fabrication de matières fibreuses et le lignite mélangé à un matériau lignocellulosique, comme les particules de bois et d'écorce.

6. Procédé selon une ou plusieurs revendications 1 à 5, **caractérisé en ce que**, lors de l'oxydation ou au terme de l'oxydation du lignite ou du lignite mélangé aux lignines, celui-ci continue d'être dopé avec des macrosubstances ou microsubstances nutritives, comme le phosphore.

7. Engrais organique à caractère humique d'après le procédé des revendications 1 à 6, **caractérisé en ce que** le produit présente un rapport C/N compris entre 9 et 15 et comparé à l'azote total, l'azote se présente sous différentes formes de composés chimiques, dont
- 20 - 45 % sous forme d'azote d'ammonium
- 55 - 80 % de composés organiques, dont
- jusqu'à 20 % d'azote total sous forme d'amide et
- jusqu'à 60 % de composés organiques ne pouvant pas être hydrolysés sous forme d'amide.

8. Engrais organique selon la revendication 7, **caractérisé en ce que,** pour un rapport C/N compris entre 9 et 15, l'engrais organique contient jusqu'à 6% d'azote total.

9. Utilisation de l'engrais organique selon une ou plusieurs revendications 7 à 8, **caractérisé en ce que** l'engrais organique est utilisé tel quel ou ajouté à des substrats améliorant les sols et les rendements.
